# EUROPEAN PATENT SPECIFICATION

(11) **EP 4 722 630 B1**
(45) Date of publication and mention of the grant of the patent: **09.12.2026**
(21) Application number: 24383072.6
(22) Date of filing: 03.10.2024
(51) Int. Cl.: F41A 3/66, F41C 23/16, F41C 23/18

(54) **STOCK FOR A FIREARM AND METHOD OF MANUFACTURING A STOCK FOR A FIREARM**
SCHAFT FÜR EINE SCHUSSWAFFE UND VERFAHREN ZUR HERSTELLUNG EINES SCHAFT FÜR EINE SCHUSSWAFFE
CROSSE POUR ARME À FEU ET PROCÉDÉ DE FABRICATION D'UNE CROSSE POUR ARME À FEU

(43) Date of publication of application: 08.04.2026
(73) Proprietor: Dikar, S.Coop., 20500 Arrasate-Mondragon Gipuzkoa (ES)
(72) Inventor: RACIONERO ZABALO, Ion, 20500 Arrasate-Mondragon (ES); NEIRA HERNÁNDEZ, Santiago Jorge, 48902 Barakaldo (ES)
(74) Representative: Galbaian S.Coop.

(56) References cited:
- WO-A1-2021/240024
- US-A1- 2022 364 818
- US-B1- 10 539 387

## Description

### TECHNICAL FIELD

The present invention relates to stocks for a firearm and methods of manufacturing such stocks.

### PRIOR ART

A firearm basically comprises three main parts: action mechanisms, a barrel and a stock. The action mechanisms load and fire the projectiles, which then pass through the barrel before being ejected. The stock supports the action mechanisms and, in many cases, the barrel. Different materials are often used for the stock.

Stocks for a firearm comprising a foam core and a carbon fibre skin are known to achieve a good compromise between lightness and stiffness compared to traditional aluminium, wood or synthetic plastic stocks. For example, WO2021240024A1 describes a method of manufacturing a stock for a firearm comprising a foam core and a carbon fibre skin.

### DISCLOSURE OF THE INVENTION

The object of the invention is to provide a stock for a firearm and a method of manufacturing a stock for a firearm, as defined in the claims.

A first aspect of the invention according to claim 1 is a stock for a firearm. The stock of the invention comprises a foam core, a carbon fibre skin and a carbon fibre insert comprising a housing for housing the action mechanisms of the firearm.

In the context of the invention, the fact that the skin and the insert are made of carbon fibre does not imply that they cannot comprise additional materials, and in particular fibres of other types combined with carbon fibre.

The carbon fibre insert comprises a sheet moulding compound (SMC) or a bulk moulding compound (BMC) comprising a resin matrix and randomly arranged chopped carbon fibres in the resin matrix. The foam core comprises a cavity in which the carbon fibre insert is housed. The carbon fibre skin covers the foam core and at least part of the carbon fibre insert housed in its cavity, and the carbon fibre insert is mechanically bonded to the carbon fibre skin. In fact, both mechanical and chemical bonding is obtained between the carbon fibre skin and the carbon fibre insert.

In the stock of the invention, the carbon fibre skin and the carbon fibre insert bonded to the carbon fibre skin form a carbon fibre coating over the foam core. This results in a carbon fibre coated stock that can be manufactured in a repeatable manner using traditional polymeric moulding processes, ensuring that in its critical areas, which are in the housing for the action mechanisms, the required mechanical requirements are met, in particular the stiffness requirements, as well as the requirements as to the shape that certain surfaces must have.

A second aspect of the invention according to claim 8 is a method of manufacturing a stock for a firearm comprising a foam core and a carbon fibre skin. The method of the invention comprises:
- a manufacturing step of a carbon fibre insert by hot stamping a sheet moulding compound (SMC) or a bulk moulding compound (BMC) comprising a resin matrix and randomly arranged chopped carbon fibres in the resin matrix, the carbon fibre insert comprising a housing to accommodate the firearm action mechanisms,
- a foaming step in which a foamable material is foamed to form the foam core, the foam core comprising a cavity to house the carbon fibre insert,
- a deposition step of carbon fibre skin in which carbon fibre sheets are deposited on the foam core and on at least part of the carbon fibre insert housed in its cavity, and
- a final shaping step of the carbon fibre skin in which external pressure and temperature is applied to the carbon fibre sheets deposited on the foam core, the carbon fibre insert being mechanically bonded to the carbon fibre skin.

In this way, a method of manufacturing a carbon fibre coated stock for a firearm by means of traditional moulding processes of polymeric materials is achieved which is repeatable, and which makes it possible to ensure that, in the critical areas of the stock, which are located in the housing to accommodate the actuating mechanisms, the requirements mentioned in relation to the first aspect of the invention are met.

These and other advantages and features of the invention will become apparent in view of the figures and the detailed description of the invention.

### DESCRIPTION OF THE DRAWINGS

Figure 1 shows a schematic representation of a firearm.
Figure 2 shows a perspective view of a stock according to an embodiment of the invention.
Figure 3 shows a partial plan view of Figure 2.
Figure 4 shows a partial section view of Figure 2.
Figure 5 shows a detailed view of the carbon fibre insert of Figure 2.
Figure 6 shows an exploded view of the foam core and carbon fibre insert of the stock of Figure 2.
Figure 7 shows a flow diagram of the method of manufacturing a stock for a firearm according to an embodiment of the invention.

### DETAILED DISCLOSURE OF THE INVENTION

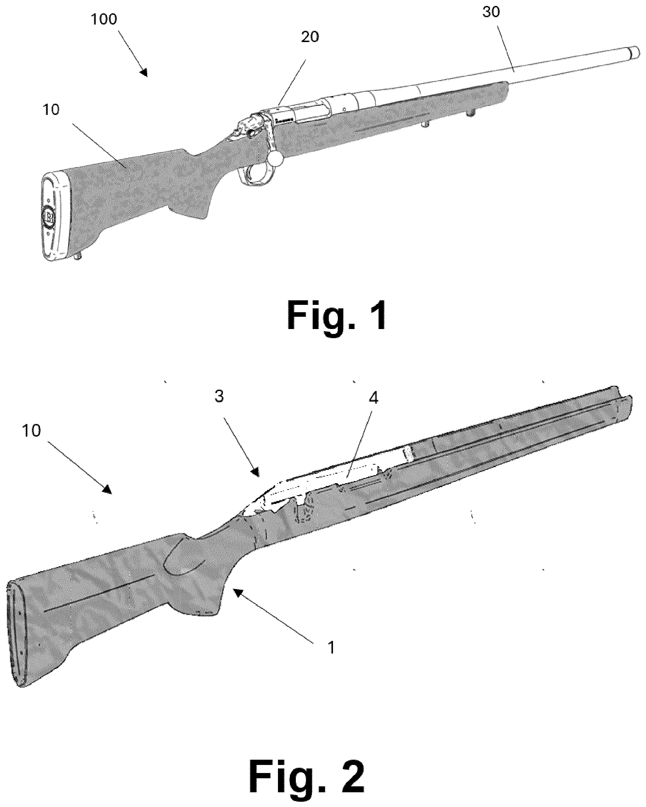

The invention relates to a stock 10 for a firearm 100. The firearm 100 comprises action mechanisms 20, a barrel 30 and a stock 10, as shown in Figure 1.

The stock 10 of the invention comprises a carbon fibre skin 1, a carbon fibre insert 3, as shown in Figure 2, and a foam core 2 (not shown in Figure 2).

The carbon fibre insert 3 comprises a housing 4 for housing the action mechanisms of the firearm 20, as shown in Figures 2 to 6. The carbon fibre insert 3 comprises a sheet moulding compound (SMC) or a bulk moulding compound (BMC) comprising a resin matrix and randomly arranged chopped carbon fibres in the resin matrix.

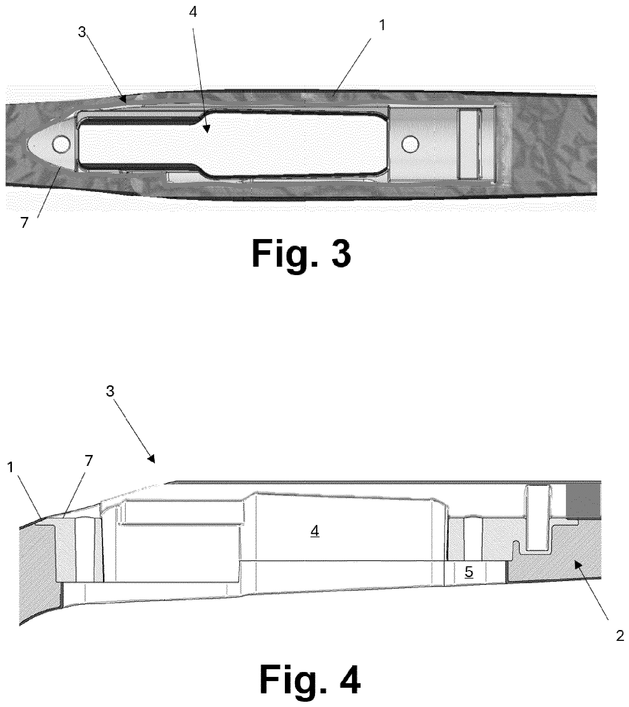

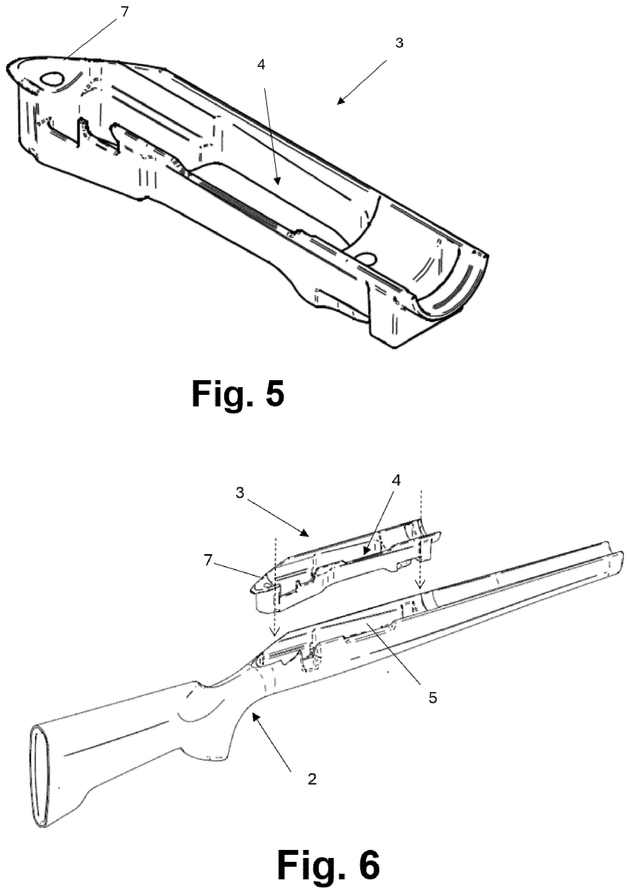

The foam core 2 comprises a cavity 5 for housing the carbon fibre insert 3, as shown in Figures 4 and 6.

The carbon fibre skin 1 covers the foam core 2 and at least part of the carbon fibre insert 3 housed in its cavity 5, as shown in Figures 2 to 4. The carbon fibre insert 3 is mechanically and chemically bonded to the carbon fibre skin 1.

In the stock 10 of the invention, the carbon fibre skin 1 and the carbon fibre insert 3 bonded to the carbon fibre skin 1 form a carbon fibre coating on the foam core 2. This results in a carbon fibre coated stock 10 which can be manufactured in a repeatable manner by traditional polymeric moulding processes, ensuring that in its critical areas, which are located in the housing 4 for housing the action mechanisms, the required mechanical requirements are met, in particular the stiffness requirements, as well as the requirements as to the shape that certain surfaces must have.

In a preferred embodiment, the carbon fibre insert 3 comprises a perimeter zone 7 delimiting the outer contour of the housing 4, at least part of the perimeter zone 7 being covered by the carbon fibre skin 1, as shown in Figures 3 and 4.

In a preferred embodiment, the carbon fibre insert 3 comprises aramid fibres, i.e. polyparaphenylene terephthalamide fibres, more commonly known as Kevlar^{®}, blended with the carbon fibres in the resin matrix. In this way, high-speed impact resistance is improved. The weight ratio of aramid fibres to carbon fibres is preferably at most 1:3.

In a preferred embodiment, the percentage by weight of fibres of the carbon fibre insert 3 is between 30-50%, preferably between 35-45%.

In a preferred embodiment, the carbon fibre skin 1 comprises a plurality of sheet moulding compounds (SMC) comprising a resin matrix and chopped carbon fibres randomly arranged in the resin matrix.

Preferably the carbon fibre insert 3 and the carbon fibre skin 1 have the same composition.

In a preferred embodiment, the carbon fibre skin 1 comprises a plurality of meshes comprising dry, woven carbon fibres formed by resin transfer moulding (RTM).

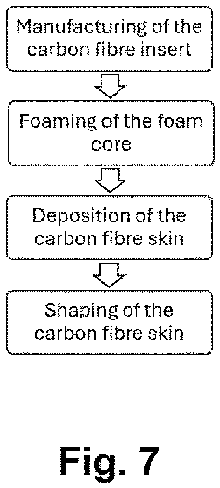

The invention also relates to a method of manufacturing a stock 10 for a firearm 100 comprising a foam core 2 and a carbon fibre skin 1. The method of the invention, as shown schematically in Figure 7, comprises:
- a manufacturing step of a carbon fibre insert 3 by hot stamping a sheet moulding compound (SMC) or a bulk moulding compound (BMC) comprising a resin matrix and randomly arranged chopped carbon fibres in the resin matrix, the carbon fibre insert 3 comprising a housing 4 to accommodate the firearm action mechanisms,
- a foaming step in which a foamable material is foamed to form the foam core 2, the foam core 2 comprising a cavity 5 for housing the carbon fibre insert 3,
- a deposition step of the carbon fibre skin 1 in which carbon fibre sheets 6 are deposited on the foam core 2 and on at least part of the carbon fibre insert 3 housed in its cavity 5, and
- a final shaping step of the carbon fibre skin 1 in which external pressure and temperature is applied to the carbon fibre sheets 6 deposited on the foam core 2, the carbon fibre insert 3 being mechanically bonded to the carbon fibre skin 1.

This provides a method of manufacturing a a carbon fibre coated stock 10 for firearm using traditional polymeric moulding processes that is repeatable and ensures that the critical areas of the stock, which are located in the housing 4 for the action mechanisms, meet the required mechanical and form requirements.

In a preferred embodiment, the carbon fibre insert 3 comprises a perimeter zone 7 delimiting the outer contour of the housing 4, at least part of the perimeter zone 7 being covered by the carbon fibre sheets 6 which are deposited at the deposition step.

In a preferred embodiment, at the foaming step the carbon fibre insert 3 is arranged in a mould in which the foamable material is foamed to form the foam core 2 with the insert housed in its cavity 5.

In a preferred embodiment, the carbon fibre sheets 6 deposited at deposition step of the carbon fibre skin 1 are a plurality of sheet moulding compounds (SMC) comprising a resin matrix and randomly arranged chopped carbon fibres in the resin matrix. Preferably, the moulding compound of the manufacturing step of the carbon fibre insert 3 and the moulding compounds of the deposition step of the carbon fibre skin 1 have the same composition.

In a preferred embodiment, at the final shaping step of the carbon fibre skin 1 the carbon fibre sheets 6 are shaped by hot stamping.

In a preferred embodiment, the carbon fibre sheets 6 deposited at the deposition step of the carbon fibre skin 1 are a plurality of meshes comprising dry and woven carbon fibres, and at the final shaping step of the carbon fibre skin 1 the carbon fibre sheets 6 are shaped by resin transmission moulding (RTM).

In a preferred embodiment, the method comprises between the carbon fibre skin 1 deposition step and the final shaping step of the carbon fibre skin 1, a fixing step of the carbon fibre sheets 6 by applying an adhesive under the deposited carbon fibre sheets 6 and/or applying vacuum pressure on the deposited carbon fibre sheets 6.

## Claims

1. Stock for a firearm, the stock (10) comprising a foam core (2) and a carbon fibre skin (1), **characterised in that** it comprises a carbon fibre insert (3) comprising a housing (4) for housing the action mechanisms of the firearm, the carbon fibre insert (3) comprising a sheet moulding compound or a bulk moulding compound comprising a resin matrix and randomly arranged chopped carbon fibres in the resin matrix, the foam core (2) comprising a cavity (5) in which the carbon fibre insert (3) is housed, the carbon fibre skin (1) covering the foam core (2) and at least part of the carbon fibre insert (3) housed in its cavity (5), and the carbon fibre insert (3) being mechanically bonded to the carbon fibre skin (1).

2. Stock according to claim 1, wherein the carbon fibre insert (3) comprises a perimeter zone (7) that delimits the outer contour of the housing (4), at least part of the perimeter zone (7) being covered by the carbon fibre skin (1).

3. Stock according to claim 1 or 2, wherein the carbon fibre insert (3) comprises aramid fibres blended with the carbon fibres in the resin matrix, wherein the weight ratio of aramid fibres to carbon fibres is preferably at most 1:3.

4. Stock according to any of claims 1 to 3, wherein the percentage by weight of fibres of the carbon fibre insert (3) is between 30-50%, preferably between 35-45%.

5. Stock according to any of the preceding claims, wherein the carbon fibre skin (1) comprises a plurality of sheet moulding compounds comprising a resin matrix and randomly arranged chopped carbon fibres in the resin matrix.

6. Stock according to any of the preceding claims, wherein the carbon fibre insert (3) and the carbon fibre skin (1) have the same composition.

7. Stock according to any of the claims 1 to 4, wherein the carbon fibre skin (1) comprises a plurality of meshes comprising dry, woven carbon fibres shaped by resin transmission moulding.

8. Method of manufacturing a stock for a firearm, the stock (10) comprising a foam core (2) and a carbon fibre skin (1), wherein the method comprises
- a manufacturing step of a carbon fibre insert (3) by hot stamping a sheet moulding compound or a bulk moulding compound comprising a resin matrix and randomly arranged chopped carbon fibres in the resin matrix, the carbon fibre insert (3) comprising a housing (4) for housing the firearm action mechanisms,
- a foaming step in which a foamable material is foamed to form the foam core (2), the foam core (2) comprising a cavity (5) for housing the carbon fibre insert (3),
- a deposition step of the carbon fibre skin (1) in which carbon fibre sheets (6) are deposited on the foam core (2) and on at least part of the carbon fibre insert (3) housed in its cavity (5); and
- a final shaping step of the carbon fibre skin (1) in which external pressure and temperature is applied to the carbon fibre sheets (6) deposited on the foam core (2), the carbon fibre insert (3) being mechanically bonded to the carbon fibre skin (1).

9. Method of manufacturing a stock according to claim 8, wherein the carbon fibre insert (3) comprises a perimeter area (7) delimiting the outer contour of the housing (4), at least part of the perimeter area (7) being covered by the carbon fibre sheets (6) that are deposited in the deposition step.

10. Method of manufacturing a stock according to claim 8 or 9, wherein at the foaming step the carbon fibre insert (3) is arranged in a mould in which the foamable material is foamed to form the foam core (2) with the insert housed in its cavity (5).

11. Method of manufacturing a stock according to any of claims 8 to 10, wherein the carbon fibre sheets (6) deposited at the deposition step of the carbon fibre skin (1) are a plurality of moulding compounds comprising a resin matrix and randomly arranged chopped carbon fibres in the resin matrix.

12. Method of manufacturing a stock according to the preceding claim, wherein the moulding compound of the manufacturing step of the carbon fibre insert (3) and the moulding compounds of the deposition step of the carbon fibre skin (1) have the same composition.

13. Method of manufacturing a stock according to any of claims 8 to 12, wherein at the final shaping step of the carbon fibre skin (1) the carbon fibre sheets (6) are shaped by means of hot stamping.

14. Method of manufacturing a stock according to any of claims 8 to 10, wherein the carbon fibre sheets (6) deposited at deposition step of the carbon fibre skin (1) are a plurality of meshes comprising dry and woven carbon fibres, and at the final shaping step of the carbon fibre skin (1) the carbon fibre sheets (6) are shaped by resin transmission moulding.

15. Method of manufacturing according to any of claims 8 to 14, comprising between the deposition step of the carbon fibre skin (1) and the final shaping step of the carbon fibre skin (1), a fixing step of the carbon fibre sheets (6) by applying an adhesive under the deposited carbon fibre sheets (6) and/or applying vacuum pressure on the deposited carbon fibre sheets (6).

## Patentansprüche

1. Schaft für eine Schusswaffe, wobei der Schaft (10) einen Schaumkern (2) und eine Kohlefaserhaut (1) umfasst, **dadurch gekennzeichnet, dass** er einen Kohlefasereinsatz (3) umfasst, der ein Gehäuse (4) zum Aufnehmen der Wirkmechanismen der Schusswaffe umfasst, wobei der Kohlefasereinsatz (3) eine Plattenformmasse oder eine Bulkformmasse umfasst, die eine Harzmatrix und in der Harzmatrix zufällig angeordnete geschnittene Kohlefasern umfasst, wobei der Schaumkern (2) einen Hohlraum (5) umfasst, in dem der Kohlefasereinsatz (3) aufgenommen ist, wobei die Kohlefaserhaut (1) den Schaumkern (2) und mindestens einen Teil des in dem Hohlraum (5) davon aufgenommenen Kohlefasereinsatzes (3) bedeckt, und wobei der Kohlefasereinsatz (3) mechanisch mit der Kohlefaserhaut (1) verbunden ist.

2. Schaft nach Anspruch 1, wobei der Kohlefasereinsatz (3) eine Umfangszone (7) umfasst, die die Außenkontur des Gehäuses (4) begrenzt, wobei mindestens ein Teil der Umfangszone (7) von der Kohlefaserhaut (1) bedeckt ist.

3. Schaft nach Anspruch 1 oder 2, wobei der Kohlefasereinsatz (3) Aramidfasern umfasst, die mit den Kohlefasern in der Harzmatrix vermischt sind, wobei das Gewichtsverhältnis von Aramidfasern zu Kohlefasern vorzugsweise höchstens 1:3 beträgt.

4. Schaft nach einem der Ansprüche 1 bis 3, wobei der Gewichtsanteil der Fasern des Kohlefasereinsatzes (3) zwischen 30-50 %, vorzugsweise zwischen 35-45 %, liegt.

5. Schaft nach einem der vorhergehenden Ansprüche, wobei die Kohlefaserhaut (1) eine Vielzahl von Plattenformmassen umfasst, die eine Harzmatrix und in der Harzmatrix zufällig angeordnete geschnittene Kohlefasern umfassen.

6. Schaft nach einem der vorhergehenden Ansprüche, wobei der Kohlefasereinsatz (3) und die Kohlefaserhaut (1) die gleiche Zusammensetzung aufweisen.

7. Schaft nach einem der Ansprüche 1 bis 4, wobei die Kohlefaserhaut (1) eine Vielzahl von Netzen umfasst, die aus trockenen, gewebten Kohlefasern bestehen, die durch Harztransmissionsformen geformt sind.

8. Verfahren zum Herstellen eines Schafts für eine Schusswaffe, wobei der Schaft (10) einen Schaumkern (2) und eine Kohlefaserhaut (1) umfasst, wobei das Verfahren Folgendes umfasst:
- einen Herstellungsschritt eines Kohlefasereinsatzes (3) durch Heißprägen einer Plattenformmasse oder einer Bulkformmasse, die eine Harzmatrix und in der Harzmatrix zufällig angeordnete geschnittene Kohlefasern umfasst, wobei der Kohlefasereinsatz (3) ein Gehäuse (4) zum Aufnehmen der Wirkmechanismen der Schusswaffe umfasst,
- einen Schäumungsschritt, bei dem ein schäumbares Material aufgeschäumt wird, um den Schaumkern (2) zu bilden, wobei der Schaumkern (2) einen Hohlraum (5) zum Aufnehmen des Kohlefasereinsatzes (3) umfasst,
- einen Abscheidungsschritt der Kohlefaserhaut (1), bei dem Kohlefaserplatten (6) auf den Schaumkern (2) und auf mindestens einen Teil des in dessen Hohlraum (5) aufgenommenen Kohlefasereinsatzes (3) abgeschieden werden; und
- einen Endformungsschritt der Kohlefaserhaut (1), bei dem auf die auf den Schaumkern (2) abgeschiedenen Kohlefaserplatten (6) äußerer Druck und Temperatur ausgeübt werden, wobei der Kohlefasereinsatz (3) mechanisch mit der Kohlefaserhaut (1) verbunden wird.

9. Verfahren zum Herstellen eines Schafts nach Anspruch 8, wobei der Kohlefasereinsatz (3) einen Umfangsbereich (7) umfasst, der die Außenkontur des Gehäuses (4) begrenzt, wobei mindestens ein Teil des Umfangsbereichs (7) von den Kohlefaserplatten (6) bedeckt ist, die im Abscheidungsschritt abgeschieden werden.

10. Verfahren zum Herstellen eines Schafts nach Anspruch 8 oder 9, wobei im Schäumungsschritt der Kohlefasereinsatz (3) in einer Form angeordnet wird, in der das schäumbare Material aufgeschäumt wird, um den Schaumkern (2) zu bilden, wobei der Einsatz in dessen Hohlraum (5) aufgenommen ist.

11. Verfahren zum Herstellen eines Schafts nach einem der Ansprüche 8 bis 10, wobei die im Abscheidungsschritt der Kohlefaserhaut (1) abgeschiedenen Kohlefaserplatten (6) eine Vielzahl von Formmassen sind, die eine Harzmatrix und in der Harzmatrix zufällig angeordnete geschnittene Kohlefasern umfassen.

12. Verfahren zum Herstellen eines Schafts nach dem vorhergehenden Anspruch, wobei die Formmasse des Herstellungsschritts des Kohlefasereinsatzes (3) und die Formmassen des Abscheidungsschritts der Kohlefaserhaut (1) dieselbe Zusammensetzung aufweisen.

13. Verfahren zum Herstellen eines Schafts nach einem der Ansprüche 8 bis 12, wobei im Endformungsschritt der Kohlefaserhaut (1) die Kohlefaserplatten (6) mittels Heißprägen geformt werden.

14. Verfahren zum Herstellen eines Schafts nach einem der Ansprüche 8 bis 10, wobei die im Abscheidungsschritt der Kohlefaserhaut (1) abgeschiedenen Kohlefaserplatten (6) eine Vielzahl von Netzen sind, die trockene und gewebte Kohlefasern umfassen, und wobei im Endformungsschritt der Kohlefaserhaut (1) die Kohlefaserplatten (6) durch Harztransmissionsformen geformt werden.

15. Verfahren zum Herstellen nach einem der Ansprüche 8 bis 14, umfassend, zwischen dem Abscheidungsschritt der Kohlefaserhaut (1) und dem Endformungsschritt der Kohlefaserhaut (1), einen Fixierungsschritt der Kohlefaserplatten (6) durch Aufbringen eines Klebstoffs unter die abgeschiedenen Kohlefaserplatten (6) und/oder Anlegen von Unterdruck an die abgeschiedenen Kohlefaserplatten (6).

## Revendications

1. Crosse pour une arme à feu, la crosse (10) comprenant une âme en mousse (2) et une peau en fibres de carbone (1), **caractérisée en ce qu'**elle comprend un insert en fibres de carbone (3) comprenant un logement (4) destiné à loger les mécanismes de fonctionnement de l'arme à feu, l'insert en fibres de carbone (3) comprenant un composé de moulage en feuille ou un composé de moulage en vrac comprenant une matrice de résine et des fibres de carbone coupées disposées aléatoirement dans la matrice de résine, l'âme en mousse (2) comprenant une cavité (5) dans laquelle l'insert en fibres de carbone (3) est logé, la peau en fibres de carbone (1) recouvrant l'âme en mousse (2) et au moins une partie de l'insert en fibres de carbone (3) logé dans sa cavité (5), et l'insert en fibres de carbone (3) étant lié mécaniquement à la peau en fibres de carbone (1).

2. Crosse selon la revendication 1, dans laquelle l'insert en fibres de carbone (3) comprend une zone périphérique (7) qui délimite le contour extérieur du logement (4), au moins une partie de la zone périphérique (7) étant recouverte par la peau en fibres de carbone (1).

3. Crosse selon la revendication 1 ou 2, dans laquelle l'insert en fibres de carbone (3) comprend des fibres d'aramide mélangées aux fibres de carbone dans la matrice de résine, le rapport pondéral des fibres d'aramide aux fibres de carbone étant de préférence d'au plus 1:3.

4. Crosse selon l'une quelconque des revendications 1 à 3, dans laquelle le pourcentage massique de fibres de l'insert en fibres de carbone (3) est de 30 à 50 %, de préférence de 35 à 45 %.

5. Crosse selon l'une quelconque des revendications précédentes, dans laquelle la peau en fibres de carbone (1) comprend une pluralité de composés de moulage en feuille comprenant une matrice de résine et des fibres de carbone coupées disposées aléatoirement dans la matrice de résine.

6. Crosse selon l'une quelconque des revendications précédentes, dans laquelle l'insert en fibres de carbone (3) et la peau en fibres de carbone (1) présentent la même composition.

7. Crosse selon l'une quelconque des revendications 1 à 4, dans laquelle la peau en fibres de carbone (1) comprend une pluralité de treillis comprenant des fibres de carbone sèches et tissées, mis en forme par moulage par transfert de résine.

8. Procédé de fabrication d'une crosse pour une arme à feu, la crosse (10) comprenant une âme en mousse (2) et une peau en fibres de carbone (1), dans lequel le procédé comprend
- une étape de fabrication d'un insert en fibres de carbone (3) par estampage à chaud d'un composé de moulage en feuille ou d'un composé de moulage en vrac comprenant une matrice de résine et des fibres de carbone coupées disposées aléatoirement dans la matrice de résine, l'insert en fibres de carbone (3) comprenant un logement (4) destiné à loger les mécanismes de fonctionnement de l'arme à feu,
- une étape de moussage au cours de laquelle un matériau expansible est expansé afin de former l'âme en mousse (2), l'âme en mousse (2) comprenant une cavité (5) destinée à loger l'insert en fibres de carbone (3),
- une étape de dépôt de la peau en fibres de carbone (1), au cours de laquelle des feuilles de fibres de carbone (6) sont déposées sur l'âme en mousse (2) et sur au moins une partie de l'insert en fibres de carbone (3) logé dans sa cavité (5) ; et
- une étape finale de mise en forme de la peau en fibres de carbone (1), au cours de laquelle une pression externe et une température sont appliquées aux feuilles de fibres de carbone (6) déposées sur l'âme en mousse (2), l'insert en fibres de carbone (3) étant lié mécaniquement à la peau en fibres de carbone (1).

9. Procédé de fabrication d'une crosse selon la revendication 8, dans lequel l'insert en fibres de carbone (3) comprend une zone périphérique (7) délimitant le contour extérieur du logement (4), au moins une partie de la zone périphérique (7) étant recouverte par les feuilles de fibres de carbone (6) qui sont déposées lors de l'étape de dépôt.

10. Procédé de fabrication d'une crosse selon la revendication 8 ou 9, dans lequel, lors de l'étape de moussage, l'insert en fibres de carbone (3) est disposé dans un moule dans lequel le matériau expansible est expansé afin de former l'âme en mousse (2), l'insert étant logé dans sa cavité (5).

11. Procédé de fabrication d'une crosse selon l'une quelconque des revendications 8 à 10, dans lequel les feuilles de fibres de carbone (6) déposées lors de l'étape de dépôt de la peau en fibres de carbone (1) sont une pluralité de composés de moulage comprenant une matrice de résine et des fibres de carbone coupées disposées aléatoirement dans la matrice de résine.

12. Procédé de fabrication d'une crosse selon la revendication précédente, dans lequel le composé de moulage de l'étape de fabrication de l'insert en fibres de carbone (3) et les composés de moulage de l'étape de dépôt de la peau en fibres de carbone (1) présentent la même composition.

13. Procédé de fabrication d'une crosse selon l'une quelconque des revendications 8 à 12, dans lequel, lors de l'étape finale de mise en forme de la peau en fibres de carbone (1), les feuilles de fibres de carbone (6) sont mises en forme au moyen d'un estampage à chaud.

14. Procédé de fabrication d'une crosse selon l'une quelconque des revendications 8 à 10, dans lequel les feuilles de fibres de carbone (6) déposées lors de l'étape de dépôt de la peau en fibres de carbone (1) sont une pluralité de treillis comprenant des fibres de carbone sèches et tissées, et, lors de l'étape finale de mise en forme de la peau en fibres de carbone (1), les feuilles de fibres de carbone (6) sont mises en forme par moulage par transfert de résine.

15. Procédé de fabrication selon l'une quelconque des revendications 8 à 14, comprenant, entre l'étape de dépôt de la peau en fibres de carbone (1) et l'étape finale de mise en forme de la peau en fibres de carbone (1), une étape de fixation des feuilles de fibres de carbone (6) par application d'un adhésif sous les feuilles de fibres de carbone (6) déposées et/ou par application d'une dépression sur les feuilles de fibres de carbone (6) déposées.
